**Europäisches Patentamt**

**European Patent Office**

**Office européen des brevets**

(19)

(11) Veröffentlichungsnummer: **0 181 947 B1**

(12) # EUROPÄISCHE PATENTSCHRIFT

(45) Veröffentlichungstag der Patentschrift:
**28.12.88**

(21) Anmeldenummer: **84113610.4**

(22) Anmeldetag: **10.11.84**

(51) Int. Cl.⁴: **A 01 B 3/42, A 01 B 15/00**

(54) **Pendelstützrad für Drehpflüge.**

(43) Veröffentlichungstag der Anmeldung:
**28.05.86 Patentblatt 86/22**

(45) Bekanntmachung des Hinweises auf die Patenterteilung:
**28.12.88 Patentblatt 88/52**

(84) Benannte Vertragsstaaten:
**AT BE CH DE FR GB IT LI NL**

(56) Entgegenhaltungen:
**DE-B- 2 509 455**
**DE-U- 8 023 453**
**FR-A- 2 333 423**

(73) Patentinhaber: **Rabewerk Heinrich Clausing, D-4515 Bad Essen 1 (DE)**

(72) Erfinder: **Buhl, Manfred, Dipl.-Ing., Am Krähenhügel 10, D-4500 Osnabrück (DE)**
Erfinder: **Albers, Heinrich, Dipl.-Ing., Rabber 32, D-4515 Bad Essen 1 (DE)**
Erfinder: **Becker, Ignaz, Dipl.-Ing., In der Hegge 2, D-4994 Pr. Oldendorf (DE)**

(74) Vertreter: **Missling, Arne, Dipl.-Ing. et al, Patentanwälte Dipl.-Ing. R. Schlee Dipl.-Ing. A. Missling Bismarckstrasse 43, D-6300 Giessen (DE)**

## Beschreibung

Die Erfindung betrifft ein Pendelstützrad für Drehpflüge mit einem am Stutzradstiel angeordneten Sporn, der relativ zum Stützradstiel beweglich ist, nach dem Oberbegriff des Anspruches 1.

Bei Anbaupflügen werden Pendelstützräder der vorstehend genannten Art vorteilhaft angeordnet, dass der Stützradstiel des Pendelstützrades beim Wenden der Pflugkörper vor der Schwenkachse des Pendelstützrades durchschwenkt. Hierdurch wird ein nahezu schlagfreies und synchrones Schwenken des Pendelstützrades mit der Drehbewegung erhalten. In der jeweiligen Endstellung, d.h. in der Arbeitsstellung, legt sich der Stützradstiel des Pendelstützrades an einen die Arbeitstiefe bestimmenden Anschlag an. Dieser Anschlag kann, um die Arbeitstiefe einstellbar zu machen, verstellbar sein. Andererseits kann auch die Verstellung der Arbeitstiefe dadurch erfolgen, dass die Länge des Stützradstieles veränderlich gemacht wird.

Nachteilig ist jedoch beim Nachvornverschwenken des Pendelstützrades, dass insbesondere beim Bergabfahren oder im unebenen Gelände das Pendelstützrad beim Absenken des Pflugrahmens pendelt und beim Aufsetzen sich vor der Schwenkachse befinden kann, so dass dieses in unerwünschter Weise nach vorn ausweicht.

Um dieses Nachvornausweichen zu verhindern, ist es bekannt, die Achse des Pendelstützrades zu blockieren, so dass das Pendelstützrad durch diesen Abbremseffekt gegenüber dem Pflug zurückbleibt und so in seine Arbeitsstellung gelangt. Des weiteren ist es aus der DE-B-25 09 455 bekannt, am Stützradstiel des Pendelstützrades einen Sporn anzubringen, der beim Aufsetzen des Rades in den Boden eindringt und so ein Nachvornschwingen des Pendelstützrades verhindert und dieses beim Weiterfahren des Pfluges in die Arbeitsstellung bringen soll. Bei dieser bekannten Vorrichtung kann die Tiefeneinstellung allerdings nur durch Verlängern oder Verkürzen des Stützradstiels erfolgen, um zu gewährleisten, dass der Sporn immer die gleiche Arbeitslage einnimmt. Würde man die andere Art der Tiefeneinstellung mittels verstellbarer Anschläge am Pflugrahmen wählen, so würde die Einrichtung nur bei einer bestimmten Arbeitstiefe zufriedenstellend arbeiten.

Des weiteren ist es aus dem deutschen Gebrauchsmuster 80 23 453 bekannt, den Sporn am Stützradstiel zwischen zwei begrenzten Stellungen verschwenkbar anzuordnen, wobei der Sporn auch aus einem federnden Material bestehen kann oder aber durch eine Feder belastet sein kann. Der Vorteil dieser Anordnung besteht darin, dass das Problem des Verstopfens beim Flachpflügen vermieden werden soll.

Beim praktischen Einsatz hat sich jedoch herausgestellt, dass die Wirkungsweise des Sporns in unebenem Gelände nur dann zufriedenstellend ist, wenn der Sporn ausreichend gross gemacht werden kann. Die Länge des Sporns ist jedoch bei den bekannten Vorrichtungen dadurch begrenzt, dass dieser auch in der Arbeitsstellung noch einen ausreichenden Abstand zum Boden aufweisen muss, damit sich nicht Bewuchsreste oder Stroh verhaken können, wodurch das Hinterrad blokkiert wird und somit der Zugbedarf unverhältnismässig hoch ansteigt. Auch die Verschwenkbarkeit, wie sie aus dem Gebrauchsmuster 80 23 453 bekannt ist, bietet hier nur eine unvollkommene Lösung, denn zum einen kann der Schwenkwinkel nicht zu gross gewählt werden, da sonst der Rückführeffekt des Sporns nicht mehr ausreichend ist. Andererseits geht die Tendenz in der Landwirtschaft dahin, dass immer mehr Stroh und auch Maisstroh in den Boden eingearbeitet wird, so dass dem Hängenbleiben von Stroh und Bewuchsresten am Sporn sowie der Gefahr der Verstopfung immer grössere Bedeutung zukommt.

Der Erfindung liegt die Aufgabe zugrunde, ein Pendelstützrad nach dem Oberbegriff des Anspruches 1 so auszubilden, dass ein Sporn mit einer solchen Länge verwendet werden kann, die unter allen Umständen eine sichere Zurückführung des Pendelstützrades in seine Arbeitsstellung bewirkt, wobei dieser Sporn so am Stützradstiel befestigt ist, dass ein Hängenbleiben von Bewuchs oder Stroh nicht erfolgt.

Diese Aufgabe wird mit den Merkmalen des kennzeichnenden Teils des Anspruches 1 gelöst.

Ein Sporn gemäss der Erfindung ist somit entweder verschiebbar und/oder schwenkbar am Stützradstiel angeordnet, wobei die Verschiebung im wesentlichen längs zum Stützradstiel sowie die Verschwenkung des Sporns relativ zum Stützradstiel zwangsweise in Abhängigkeit der Stellung des Stützradstiels relativ zum Pflugrahmen erfolgt. Hierbei kann entweder die Relativbewegung des Stützrades zum Stützradstiel bzw. die Relativbewegung vom Stützradstiel zum Pflugrahmen ausgenutzt werden.

Wird eine Lösung gewählt, bei der eine Verschwenkung des Sporns relativ zum Stützradstiel erfolgt, so wird vorteilhaft der Sporn in seiner Eingreifstellung, d.h. in seiner Stellung in Längsrichtung des Stützradstiels, durch eine starke Feder gehalten, die eine Auslenkung des Sporns beim Eingreifen in den Boden und beim Verzögern des Pendelstützrades ausschliesst. Die Stärke der Feder ist so gross gehalten, dass diese erst eine Verschwenkung des Sporns zulässt, wenn der Stützradstiel des Pendelstützrades an seinen Endanschlag, d.h. in seine Arbeitsstellung gelangt ist. In dieser Stellung muss dann das Pendelstützrad zusätzlich zumindest einen Teil des Gewichtes des Pfluges tragen. Hierdurch wird die Feder dann so stark beansprucht, dass eine Auslenkung des Sporns nach hinten oben erfolgt, so dass Bewuchs oder Stroh unter dem Sporn frei hindurchgleiten können. Diese Auslenkung des Sporns unter der Last des Pfluges kann entweder dadurch erreicht werden, dass die Achse des Stützrades im drehbar gelagerten Sporn angeordnet ist, wobei die Lagerstelle der Stützradachse sowie die Lagerstelle des Sporns einen Abstand zueinander aufweisen. Eine andere mögliche Lösung besteht darin, dass der Sporn an seinem hinteren Ende mit Anschlägen versehen ist, die seitlich zur Längsachse des Sporns mit Abstand angeordnet sind. Diese Anschläge des beweglich gelagerten Sporns wirken mit am Pflugrahmen angeordneten Anschlägen zusammen, so dass auch hier eine Auslenkung des Sporns dann eintritt, wenn auf das Pendelstützrad die vollen Pflugkräfte einwirken.

Wird eine Lösung gewählt, bei der eine Verschiebung des Sporns im wesentlichen in Richtung des Stützradstiels erfolgt, so ist der Sporn vorteilhaft in einer Führung gehalten, die als Tasche ausgebildet sein kann und am Stützradstiel befestigt ist. Wird diese Tasche schwenkbar am Stützradstiel befestigt, so kann das Ende des Sporns unmittelbar gelenkig am Pflugrahmen an einer Stelle mit einem ausreichenden Abstand zur Schwenkachse des Stützradstiels angelenkt werden. Wird hingegen eine Tasche verwendet, die starr am Stützradstiel befestigt ist, so wird das Ende des Sporns über einen Lenker am Pflugrahmen angeschlossen. In lotrecht herabhängender Stellung ragt dann der Sporn am weitesten nach unten heraus und wird mit wachsender Auslenkung in Richtung auf seine Anschläge, d.h. in Richtung auf seine Arbeitsstellung, in die Tasche hineingezogen und erfährt somit in der Arbeitsstellung einen ausreichenden Abstand zum Boden, so dass Verstopfungen vermieden sind. Neben der Verschiebbarkeit kann der Sporn auch noch verschwenkbar ausgebildet sein. Die Anlenkung ist darüberhinaus so gewählt, dass beim Nachvorndurchschwingen des Pendelstützrades der Sporn entweder seine maximale Ausfahrlänge beibehält oder aber noch weiter ausgefahren wird, so dass ein Zurückführen des Pendelstützrades mit Sicherheit gewährleistet ist.

Die Verschwenkung des drehbar am Pendelstützrad aufgehängten Sporns kann auch mittels eines Getriebes erfolgen, wobei das Getriebe zwischen Sporn und Pflugrahmen eingeschaltet ist, wobei die Schwenkbewegung des Stützradstiels relativ zum Pflugrahmen zur Verschwenkung des Sporns herangezogen wird. Als Getriebe kann z.B. ein Zahnradgetriebe verwendet werden, das auf wenige Zähne reduziert ist und in Form von Zapfen und Führungen ausgebildet ist, die am Pflugrahmen und am Stützradstiel angeordnet sind. Es ist auch ein Getriebe denkbar, das aus einer Führung am Pflugrahmen besteht, in der ein Kulissenstein gleitet, der ein Übertragungsglied betätigt, das den Sporn entsprechend verstellt.

Weitere vorteilhafte Ausgestaltungen der Erfindung gehen aus den Unteransprüchen in Verbindung mit Zeichnung und Beschreibung hervor.

Mehrere Ausführungsbeispiele sind im folgenden anhand der Zeichnung näher beschrieben, in dieser zeigen:

Fig. 1 eine Seitenansicht eines Anbaudrehpfluges mit einem erfindungsgemäss ausgebildeten Pendelstützrad,

Fig. 2 ein Ausführungsbeispiel eines Pendelstützrades gemäss der Erfindung mit einem schwenkbar angeordneten Dorn,

Fig. 3 eine weitere Abänderung des Ausführungsbeispiels nach Fig. 2,

Fig. 4 ein weiteres Ausführungsbeispiel eines erfindungsgemäss ausgebildeten Pendelstützrades mit einem schwenkbar am Stützradstiel angeordneten Sporn,

Fig. 5 und 6 zwei Ausführungsbeispiele mit einem verschiebbar am Pendelstützrad gelagerten Dorn und

Fig. 7 bis 11 zwei weitere Ausführungsbeispiele eines erfindungsgemässen Pendelstützrades, bei denen zur Verschwenkung des Sporns ein zwischen Sporn und Pflugrahmen eingeschaltetes Getriebe dient.

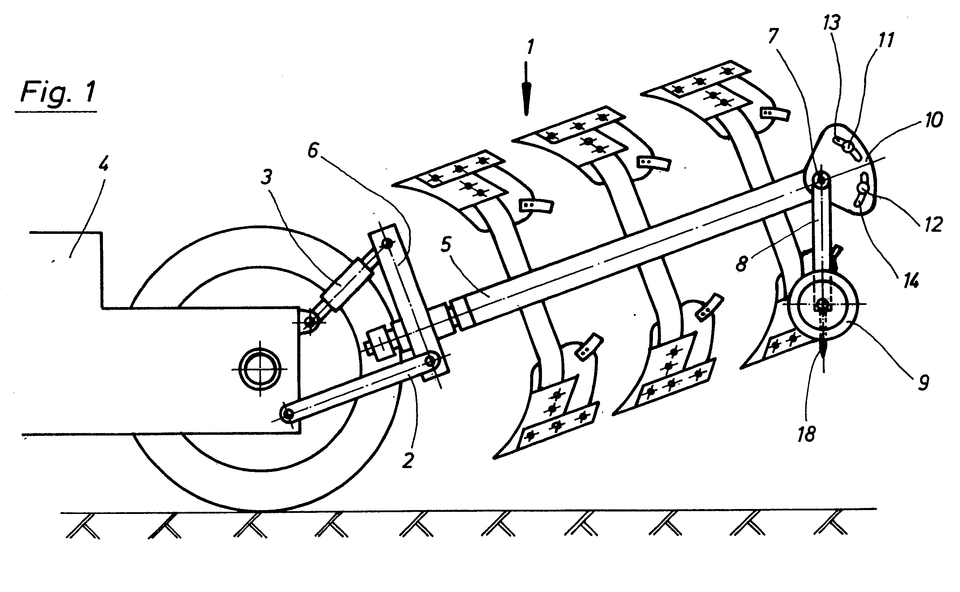

In Fig. 1 ist ein Anbaudrehpflug 1 dargestellt, der an einem Dreipunktgestänge 2, 3 eines Schleppers 4 in bekannter Weise angekoppelt ist. Der Pflugrahmen 5 ist im Pflugvordergestell 6 drehbar gelagert. Am hinteren Ende des Pfluges ist an einer in etwa quer zur Fahrtrichtung verlaufenden Achse 7 ein Stützradstiel eines Pendelstützrades 9 gelagert. An einer fest mit dem Rahmen 5 verbundenen Befestigungsplatte 10 sind zwei Anschläge 11, 12 angebracht, die in Langlöchern 13, 14 verschiebbar sind. In der Arbeitsstellung legt sich der Stützradstiel 8 an die Anschläge 11 bzw. 12 an. Die Neigung des Stützradstieles 8 zum Rahmen 5 ergibt sich aus dem Abstand der Radachse 23 sowie der Lage der Anschläge 11, 12 in der Platte 10. Ein am Stützradstiel befestigter Sporn 18 greift über den Umriss des Pendelstützrades 9 hinaus.

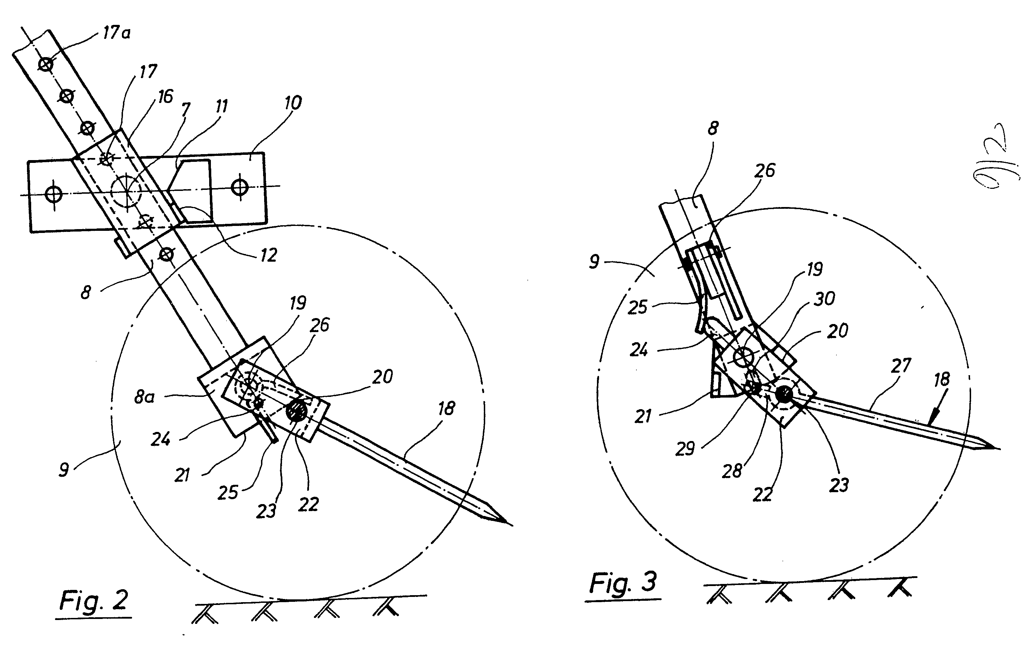

In Fig. 2 ist eine Ausführungsform eines erfindungsgemäss ausgebildeten Pendelstützrades 15 in vergrösserter Darstellung gezeigt. Gleiche Teile sind mit gleichen Bezugszeichen versehen. Die Tiefeneinstellung erfolgt bei dieser Ausführungsform des Pendelstützrades 15 nicht über verstellbare Anschläge 11, 12, sondern über einen in seiner Länge verstellbaren Stützradstiel 8. Der Stützradstiel 8 ist in einer Tasche 16 geführt, die um die Achse 7 des Stützradstieles schwenkbar ist. In der Tasche 16 ist eine Bohrung 17 angeordnet. Der Stützradstiel 8 weist des weiteren eine Lochreihe 17a auf, so dass der Stützradstiel 8 in der Tasche 16 durch Einstecken eines Bolzens durch die Bohrungen 17 und 17a festlegbar ist. Am unteren Ende des Stützradstieles 8 ist ein Sporn 18 befestigt, der um eine Achse 19, die von einem gabelförmigen Endstück 8a des Stützradstieles 8 getragen ist, schwenkbar ist. Der Schwenkbereich des Sporns 18 wird durch zwei Anschläge 20, 21 begrenzt. Der Sporn 18 weist ein gabelförmiges Teil 22 auf, das das Endstück 8a übergreift und die Radachse 23 des Stützrades 9 aufnimmt. Diese Radachse 23 ist unterhalb der Achse 19 angeordnet. Das Endstück 8a weist einen zwischen der Achse 19 und der Radachse liegenden Stift 24 auf, der zwischen die Schenkel 25 und 26 einer Schenkelfeder greift, die in der Gabel des Endstücks 8a angeordnet ist und in mehreren Windungen die Achse 19 umgibt. Die Schenkel der Schenkelfeder liegen ausserdem an der durch das gabelförmige Teil 22 hindurchgreifenden Radachse 23 an. Die Stärke der Schenkelfeder ist so gewählt, dass der Sporn 18 durch diese Schenkelfeder in seiner Mittelstellung gehalten wird, in der dieser in Achsrichtung des Stützradstieles liegt. Beim Wechsel der Pflugrichtung dringt zunächst der Sporn in das Erdreich ein. Diese Kräfte, die das Stützrad gegenüber dem Pflugrahmen verzögern, werden von der Schenkelfeder aufgenommen, ohne dass eine Verschwenkung des Sporns eintritt. Erst wenn der Stützradstiel 8 an den Anschlägen 11, 12 zur Anlage kommt und somit das Gewicht des Pfluges auf dem Stützrad 9 lastet, wird die Vorspannung der Schenkelfeder überschritten, und zwar aufgrund des Hebelarmes, der durch den Abstand der Achse 19 und der Radachse 23 erhalten wird. Es erfolgt dann eine Ausschwenkung des Sporns nach hinten, wie dies in Fig. 2 gezeigt ist. Der Schwenkbereich des Sporns 18 wird durch die Anschläge 20, 21 begrenzt, die auch einstellbar ausgebildet sein können. Die Verschwenkung des Sporns 18 wird so gewählt, dass Bewuchsreste oder aber auch Stroh am Sporn vorbeigleiten können, ohne dass diese hängen bleiben und zu einer Verstopfung führen können. Durch die Verschwenkbarkeit, und zwar die Zwangsverschwenkung des Sporns, kann dieser mit einer wesentlich grösseren Länge ausgebildet werden als dies bei nicht verschwenkbaren Spornen oder aber auch bei solchen der Fall ist, bei denen lediglich eine gewisse Federwirkung erzielt wird und die auch in der Arbeitsstellung in eine Lage gezwungen werden, in der diese in Längsrichtung des Stützradstieles 8 liegen.

Das in Fig. 3 gezeigte Ausführungsbeispiel entspricht im wesentlichen dem nach Fig. 2, mit dem Unterschied, dass hier der Sporn zweigeteilt ausgebildet ist und eine Blattfeder verwendet wird. Der Sporn 18 besteht hier aus einem Teil 22, das wiederum gelenkig über die Achse 19 am Stützradstiel 8 angeschlossen ist und einen nach oben weisenden Ansatz 24 trägt. In diesem Teil 22 ist die Radachse 23 des Stützrades 9 gelagert. Das Teil 22 hat den nach oben weisenden Ansatz 24, an dem seitlich zwei Blattfedern 25, 26 anliegen. Die Blattfedern sind am Stützradstiel 8 befestigt. Das nach unten weisende Ende 27 des Sporns 18 ist drehbar auf der Radachse 23 gelagert und hat einen über die Radachse 23 überstehenden Ansatz 28, der einen Zapfen 29 trägt. Dieser Zapfen 29 greift in eine im Ende des Stützradstieles 8 ausgebildete Führung 30. Der Vorteil dieser Anordnung besteht darin, dass der Sporn 18 bei der Belastung des Stützrades 9 nicht nur um den Betrag zwischen den Anschlägen 20, 21 nach hinten ausgelenkt wird, wie dies nach dem Ausführungsbeispiel nach Fig. 2 der Fall ist, sondern um ein durch die Führung 30 bestimmtes weiteres Stück. Hierdurch ist es bei einer relativ kleinen Lageänderung des Stützrades relativ zum Pflugrahmen möglich, einen grossen Ausschwenkwinkel des Sporns 18 zu erhalten.

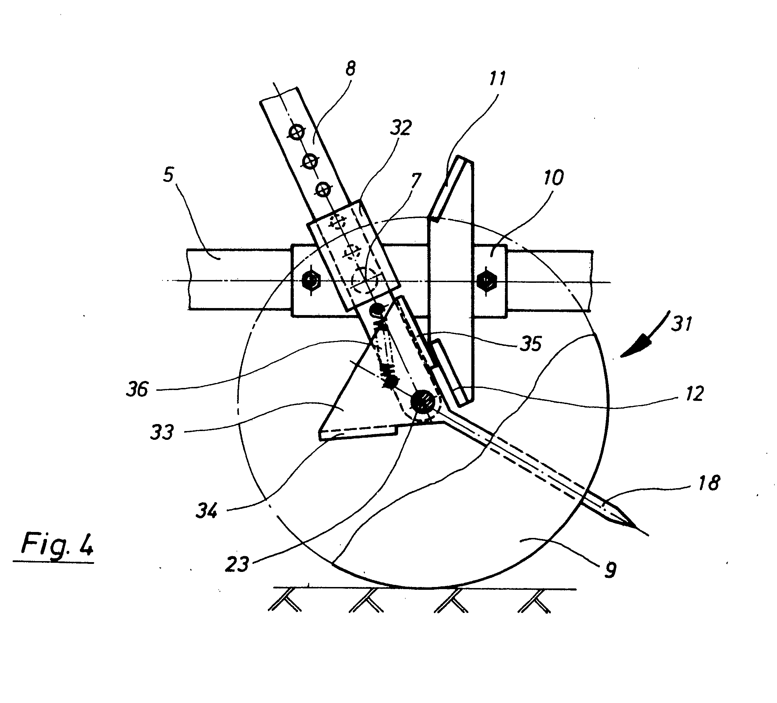

Bei dem Ausführungsbeispiel nach Fig. 4 sind gleiche Teile mit gleichen Bezugzeichen versehen. Das dargestellte Pendelstützrad 31 weist zur Höhenverstellung eine Tasche 32 auf, in der der Stützradstiel 8 verschiebbar ist. Die Festlegung des Stützradstieles 8 in der Tasche 32 erfolgt in gleicher Weise wie anhand der Fig. 2 beschrieben. Die Tasche 32 ist wiederum um eine Achse 7 am Pflugrahmen 5 drehbar gelagert. Zwei Endanschläge 11, 12 dienen zur Festlegung der Arbeitsstellung des Stützrades 9.

Der Sporn 18 ist auf der Radachse 23 des Stützrades 9 drehbar gelagert und weist an seinem oberen Ende eine Ausstülpung 33 auf, die zwei Anschläge 34, 35 bildet. Diese Anschläge haben eine grosse Erstreckung, so dass sichergestellt ist, dass bei Verschiebung des Stützradstieles 8 diese an den Anschlägen 11, 12 der Befestigungsplatte 10 zur Anlage kommen. An der Ausstülpung 33 des Sporns 18 greift eine Zugfeder 36 an, die eine solche Vorspannung hat, dass der Sporn 18 bei normaler Beanspruchung durch Bewuchs, Stroh und Widerstand im Erdreich nicht ausgelenkt wird und erst dann eine Auslenkung erfährt, wenn das Pfluggewicht über die Anschläge 11, 12 auf den Sporn 18 und damit den Stützradstiel 8 übertragen wird. Die Funktionsweise ist ansonsten die gleiche wie anhand der Ausführungsbeispiele nach den Fig. 2 und 3 bereits beschrieben.

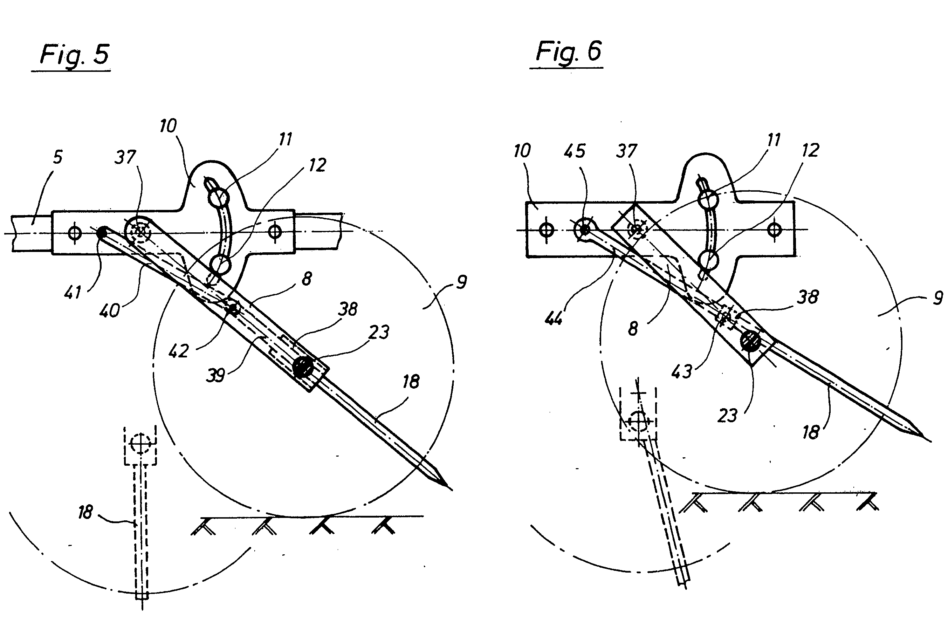

Bei dem Ausführungsbeispiel nach Fig. 5 sind gleiche Teile mit gleichen Bezugzeichen versehen. Bei diesem Ausführungsbeispiel ist der Stützradstiel 8 unmittelbar über eine Achse 37 am Pflugrahmen 5 angeschlossen. Die Höhenverstellung des Stützrades 9 gegenüber dem Pflugrahmen 5 erfolgt über verstellbare Anschläge 11, 12, die in der Befestigungsplatte 10 angeordnet sind, die mit dem Pflugrahmen 5 verbunden ist. Der Sporn 18 ist in einer Tasche 38 geführt, die am Stützradstiel befestigt ist. Der Sporn 18 greift mit seinem hinteren Teil 39 durch die Tasche 38 hindurch und ist über einen Lenker 40 mit der Befestigungsplatte 10 verbunden, wobei die Gelenkstellen des Lenkers 40 mit 41 und 42 bezeichnet sind. Durch die Relativbewegung des Stützradstieles zum Pflugrahmen 5 wird der Sporn 18 in der Tasche 38 verschoben, und zwar derart, dass dieser eine grosse Überstandslänge über das Stützrad 9 aufweist, wenn er in etwa senkrecht zum Pflugrahmen liegt und nur eine geringe Überstandslänge, wenn das Pendelstützrad 9 in seiner Arbeitsstellung ist, d.h. wenn der Stützradstiel 8 an den Anschlägen 11, 12 anliegt. Diese Verschiebbarkeit des Sporns relativ zum Stützradstiel 8 schafft eine grosse Bodenfreiheit des Sporns 18 in der Arbeitsstellung des Stützradstiels, so dass ein Verstopfen mit Sicherheit vermieden ist.

Bei dem Ausführungsbeispiel nach Fig. 6 sind gleiche Teile mit gleichen Bezugzeichen versehen. Die Höhenverstellung des Stützrades 9 relativ zum Pflugrahmen 5 ist die gleiche wie anhand des Ausführungsbeispiels nach Fig. 5 beschrieben. Der Stützradstiel 8 ist über eine Achse 37 unmittelbar an der Befestigungsplatte 10 angeschlossen. Im Unterschied zum Ausführungsbeispiel nach Fig. 5 ist die Tasche 38, in der der Sporn 18 geführt ist, nicht starr mit dem Stützradstiel 8 verbunden, sondern um eine Achse 43 schwenkbar mit dem Stützradstiel 8 verbunden. Der Sporn 18 gleitet in dieser Tasche 38 und weist ein verlängertes Ende 44 auf, das über eine Achse 45 gelenkig an der Befestigungsplatte 10 angeschlossen ist. Der Vorteil der Ausbildung eines Pendelstützrades nach den Fig. 5 und 6 besteht darin, dass der Sporn desto tiefer zum Erdboden hin gegenüber dem Stützradstiel ausfährt, je weiter das Pendelstützrad nach vorn verschwenkt ist. Hierdurch wird das Stützrad 9 erst recht und nahezu gewaltsam nach hinten gezwungen. Beim Ausführungsbeispiel nach Fig. 6 kommt gegenüber dem nach Fig. 5 der Vorteil hinzu, dass ein Lenker 40 nicht mehr benötigt wird, sondern der Sporn 18 unmittelbar an der Befestigungsplatte 10 angeschlossen werden kann. Des weiteren wird durch die schwenkbar gelagerte Tasche 38 eine noch weitergehende Schwenkung des Sporns 18 in der Arbeitsstellung nach oben erhalten, was den Durchfluss von Bewuchsresten und Stroh zusätzlich erleichtert.

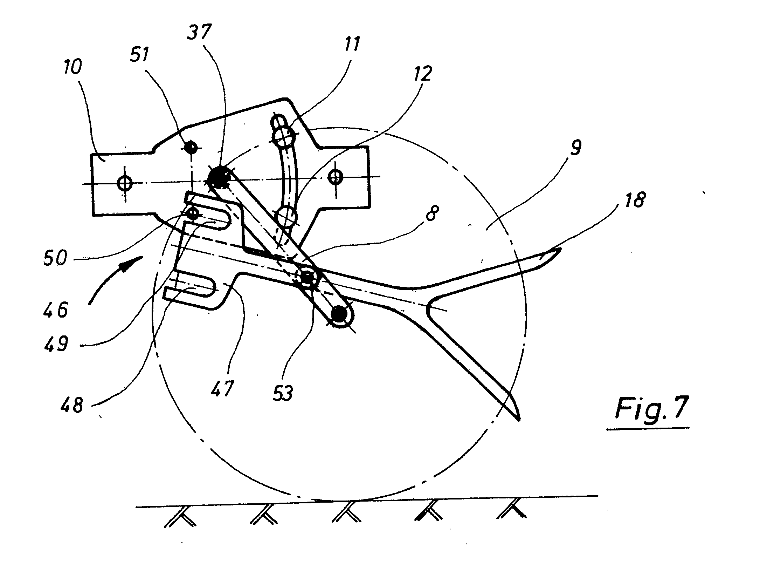

Bei den Ausführungsbeispielen nach Fig. 7 sind gleiche Teile mit gleichen Bezugszeichen versehen. Hier erfolgt die Tiefeneinstellung des Stützrades 9 über am Pflugrahmen 5 verstellbar angeordnete Anschläge 11, 12. Der Stützradstiel 8 ist an der Befestigungsplatte 10 des Pflugrahmens 5 über eine Achse 37 angeschlossen. Der Sporn 18 ist zweiteilig ausgebildet, und zwar durchdringt der Lagerzapfen 53 den Stützradstiel 8, wobei sich das untere gabelförmige Ende auf der einen Seite und das obere Ende 47 des Sporns 18 auf der anderen Seite des Stieles 8 befindet, wobei beide Enden mit dem Lagerzapfen 53 drehfest verbunden sind. Zur Verschwenkung des Sporns 18 dient ein Getriebe 46, das aus zwei am Ende 47 des Sporns 18 ausgebildeten Führungen 48, 49 und zwei Zapfen 50, 51 gebildet ist, die an der Befestigungsplatte 10 befestigt sind. Es handelt sich hier im Prinzip um eine Zahnradkopplung von Sporn 18 und Pflugrahmen 5, wobei dieses Zahnradgetriebe auf zwei Zähne reduziert worden ist. Beim Verschwenken des Stützrades 9 in der Zeichnung nach links wird der Zapfen 50 tiefer in die Führung 49 eingeführt, wobei gleichzeitig mit wachsender Verschwenkung zur Lotrechten hin eine Verschwenkung des Sporns 18 erfolgt. Der Sporn 18 greift dann mit einem grossen Abstand zum Stützrad 9 in den Boden ein, so dass das Stützrad 9 nach hinten an die Anschläge 11, 12 gezwungen wird. Nach dem Wenden des Pflugrahmens dienen die Führung 48 und der Zapfen 51 zur Führung des Sporns 18.

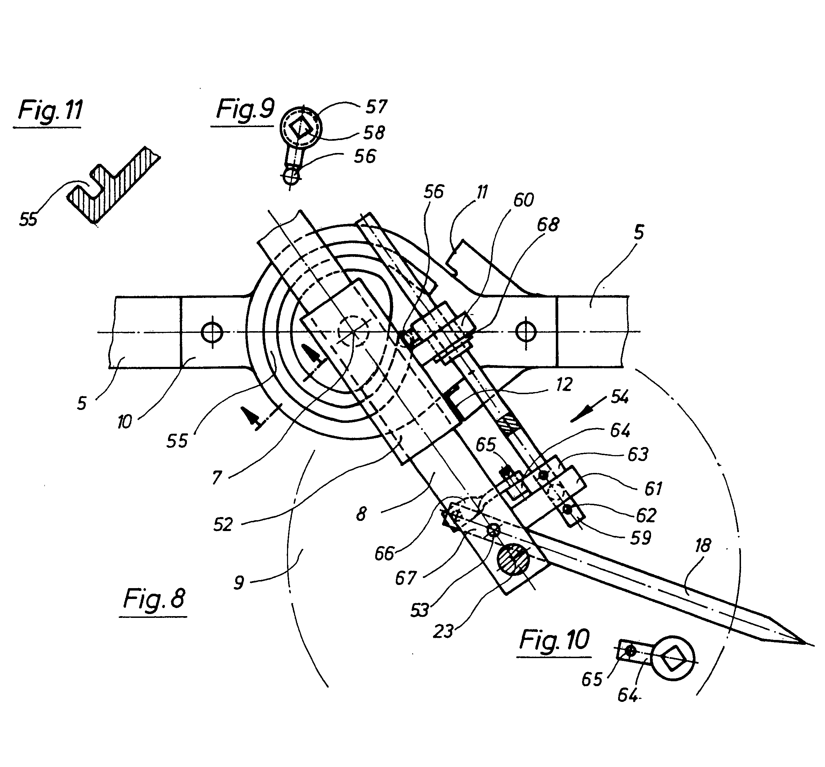

Bei dem Ausführungsbeispiel nach den Fig. 8 bis 10 ist der Stützradstiel 8 wiederum in einer Tasche 52 geführt. Diese Tasche 52 ist um eine Achse 7 schwenkbar am Pflugrahmen 5 befestigt. Die Verstellung des Stützradstiels 8 in der Tasche erfolgt so, wie dies anhand des Ausführungsbeispiels in Fig. 2 beschrieben ist. Der Stützradstiel 8 bzw. die Tasche 52 legt sich in der Arbeitsstellung an Anschläge 11, 12, die fest über die Befestigungsplatte 10 mit dem Pflugrahmen 5 verbunden sind. Das Stützrad 9 ist mit der Radachse 23 im Stützradstiel 8 gelagert. Am Stützradstiel 8 ist ferner der Sporn 18 um eine Achse 53 verschwenkbar. Zur Verschwenkung des Sporns 18 dient ein Getriebe 54, das aus einer Kulisse 55 sowie einem Kulissenstein 56 besteht, der in der Kulisse 55 geführt ist, sowie aus Übertragungselementen, die die Bewegung des Kulissensteins 56 in eine Drehbewegung des Sporns 18 um seine Achse 53 umsetzen. Die Kulisse 55 ist um die Achse 7 herumgeführt, wobei die Form der Kulisse 55 so gewählt ist, dass der Sporn bei lotrecht herabhängendem Stützradstiel am weitesten über das Stützrad 9 hinaussteht und erst dann nach hinten verschwenkt wird, wenn der Stützradstiel sich den Anschlägen 11, 12 nähert.

Der Kulissenstein 56 ist in Fig. 9 dargestellt. Mit dem Kulissenstein 56 ist eine Aufnahme 57 verbunden, die eine quadratische Aussparung 58 aufweist. In diese Aussparung greift eine vierkantförmige Stange 59, die ihrerseits drehbar an der Tasche 52 und am Stützradstiel 8 über Lagerbuchsen 60, 61 befestigt ist. In der Lagerbuchse 61 ist die Stange 59 gegen Verschieben in Längsrichtung gesichert, und zwar durch einen Stift 62 sowie eine Aufnahme 63. Die Aufnahme 63 besitzt einen Arm 64, der einen Zapfen 65 trägt. Auf dem Zapfen 65 ist ein Lenker 66 schwenkbar befestigt, dessen anderes Ende um 90° abgewinkelt ist und am Ende 67 des Sporns 18 angelenkt ist.

Bei einer Verschwenkung des Stützradstiels 8 aus seiner in Fig. 8 dargestellten Arbeitsstellung nach links gleitet der Kulissenstein 56 in der Kulisse 55, die im Querschnitt in Fig. 11 dargestellt ist, wodurch eine Verdrehung der Stange 59 und damit über die Lagerbuchsen 60, 61 und den Lenker 66 eine Verdrehung des Sporns eingeleitet wird. Der Abstand des Kulissensteins 56 von der Achse 7 ändert sich im Anfang der Drehbewegung sehr stark, und zwar solange, bis die maximale Ausfahrstellung des Sporns bei lotrecht herabhängenden Stützradstiel 8 erreicht ist. Im Anschluss hieran bleibt der Abstand der Kulisse 55 von der Achse 7 in etwa gleich, so dass der Sporn 18 seine ausgefahrene Stellung solange beibehält, bis er auf der gegenüberliegenden Seite wieder über die lotrechte Stellung hinaus nach hinten gegen den Anschlag 11 gedrückt wird. In dieser Stellung ist der Sporn analog der gezeigten Stellung nach hinten oben verfahren, so dass eine grosse Bodenfreiheit für den Durchgang von Stroh etc. erhalten wird.

Die Lagerbuchsen 60 und 61, die die Stange 59 aufnehmen, sind dem Querschnitt der Stange 59 angepasst. Zur Vereinfachung ist die Lagerbuchse 61 mit einer runden Ausnehmung versehen, in die das in diesem Bereich gleichfalls rund abgedrehte Ende der Stange 59 eingreift. Zur Sicherung der Aufnahme 57 in der Lagerbuchse 60 dient des weiteren ein Sicherungsring 68, der unterhalb der Lagerbuchse 60 auf die diese durchgreifende Aufnahme 57 aufgesetzt ist.

Vorteilhaft ist mit dem Sporn 18 ein Abstreifer verbunden, der zur Reinigung der Stützräder dient und zusammen mit dem Sporn verschwenkbar ist, um beim Pflügen ausser Kontakt mit Bewuchs und Stroh zu kommen. Des weiteren kann es auch vorteilhaft sein, einen Abstreifer allein mit einer Schwenkeinrichtung zu verwenden.

**Patentansprüche**

1. Pendelstützrad für einen Drehpflug, mit einem am Stützradstiel (8) relativ zu diesem beweglich angeordneten Sporn (18), wobei der Stützradstiel an einer quer zur Fahrtrichtung verlaufenden Achse (7) des Pflugrahmens (5) angeordnet ist und in seiner Arbeitsstellung schräg nach hinten geneigt an einem Anschlag (11 bzw. 12) des Pflugrahmens anliegt, beim Anheben des Pflugrahmens durch Schwerkraftwirkung in eine lotrechte Stellung gelangt und beim Drehen des Pflugrahmens zunächst nach vorn und dann in die gegenüberliegende lotrechte Stellung schwenkt, dadurch gekennzeichnet, dass der Sporn (18) am Stützradstiel (8) verschiebbar und/oder in an sich bekannter Weise um eine Achse (19, 23, 42, 45, 53) schwenkbar gelagert ist und dass zur Verschiebung bzw. Verschwenkung des Sporns (18) relativ zum Stützradstiel (8) in Abhängigkeit von der Bewegung des Stieles gegenüber dem Pflugrahmen (5) die Relativbewegung zwischen Stützradstiel (8) und Sporn (18) durch mechanische Verbindungselemente (22; 32; 40; 46; 54) bewirkt wird.

2. Pendelstützrad nach Anspruch 1, bei dem eine Verschwenkung des Sporns (18) relativ zum Stützradstiel (8) erfolgt, dadurch gekennzeichnet, dass das Radlager (23) des Stützrades am Sporn (18) mit grösserem Abstand zur Lagerung (7) des Stützradstieles (8) angeordnet ist als die Lagerstelle (19) des Sporns (18) am Stützradstiel (8), dass der Schwenkbereich des Sporns (18) relativ zum Stützradstiel (8) durch Anschläge (20, 21) begrenzt ist und dass der Sporn (18) mit wenigstens einer Feder (25, 26) zusammenwirkt, die den Sporn (18) in eine Stellung belastet welche etwa in der Längsrichtung des Stützradstieles (8) liegt.

3. Pendelstützrad nach Anspruch 2, dadurch gekennzeichnet, dass das untere Ende des Stützradstieles (8) sowie das obere Ende des Sporns (18) gabelförmig ausgebildet sind und dass die Feder (25, 26) an oder nahe dem unteren Ende des Stützradstieles (8) angeordnet ist.

4. Pendelstützrad nach Anspruch 3, dadurch gekennzeichnet, dass die Feder (25, 26) eine Schenkelfeder ist, die an der Achse (19) befestigt ist und auf das Radlager (23) mit ihren Schenkeln einwirkt, zwischen die ein weiterer Anschlag (24) greift.

5. Pendelstützrad nach Anspruch 3 oder 4, dadurch gekennzeichnet, dass die Anschläge (20, 21) von den Ecken der gabelförmigen Enden des Stützradstieles (8) gebildet sind.

6. Pendelstützrad nach Anspruch 2, dadurch gekennzeichnet, dass der Sporn (18) über seine Lagerstelle(19) hinaus nach oben verlängert ist und zwischen zwei Blattfedern (25, 26) greift.

7. Pendelstützrad nach einem der Ansprüche 2 bis 6, dadurch gekennzeichnet, dass der Sporn (18) zweiteilig ausgebildet ist, dass im ersten am Stützradstiel (8) befestigten Teil (22) das Radlager (23) des Stützrades (9) angeordnet ist und dass der zweite Teil (27) des Sporns (18) um dieses Radlager (23) schwenkbar und mit einem Zapfen (29) eines Ansatzes (28) in einer im unteren Ende des Stützradstieles (8) ausgebildeten Führung (30) verschiebbar gehaltert ist.

8. Pendelstützrad nach Anspruch 7, dadurch gekennzeichnet, dass die Führung (30) im unteren Ende des Stützradstieles (8) zwischen dem Radlager (23) und der Anlenkung (19) des ersten Teiles (22) des Sporns (18) am Stützradstiel (8) liegt.

9. Pendelstützrad nach Anspruch 1, mit einem verschiebbar am Stützradstiel (8) befestigten Sporn (18), dadurch gekennzeichnet, dass der Sporn (18) in einer am Stützradstiel befestigten Halterung (38) verschiebbar gelagert ist und dass das Ende (39) des Sporns (18) unmittelbar oder mittelbar mit dem Pflugrahmen (5) verbunden ist.

10. Pendelstützrad nach Anspruch 9, dadurch gekennzeichnet, dass die Halterung (38) fest am Stützradstiel (8) angeordnet ist und dass zwischen dem Sporn (18) und dem Pflugrahmen (5) bzw. der Befestigungsplatte (10) ein Lenker (40) eingeschaltet ist.

11. Pendelstützrad nach Anspruch 9, dadurch gekennzeichnet, dass die Halterung (38) um eine parallel zur Radachse liegende Achse (43) am Stützradstiel (8) drehbar ist und dass das Ende (44) des Sporns (18) an der Befestigungsplatte (10) angelenkt ist.

12. Pendelstützrad nach Anspruch 1, bei dem eine Verschwenkung des Sporns (18) relativ zum Stützradstiel (8) erfolgt, dadurch gekennzeichnet, dass am hinteren Ende des Sporns (18) zwei mit Abstand zu seiner Drehachse (23) angeordnete Anschläge (34, 35) ausgebildet sind, die mit am Pflugrahmen (5) vorgesehenen Anschlägen (11, 12) zusammenwirken, und dass der Sporn (18) durch eine Feder (36) in eine Stellung belastet ist, die etwa in der Längsrichtung des Stützradstieles (8) liegt.

13. Pendelstützrad nach Anspruch 12, dadurch gekennzeichnet, dass die Anschläge (34, 35) am Sporn und/oder die Anschläge (11, 12) am Pflugrahmen verstellbar und in ihrer Form so gestaltet sind, dass ein grosser Tiefeneinstellbereich erhalten wird.

14. Pendelstützrad nach Anspruch 1, bei dem eine Verschwenkung des Sporns (18) relativ zum Stützradstiel (8) erfolgt, dadurch gekennzeichnet, dass der Sporn (18) am Stützradstiel über eine senkrecht zu diesem liegende Achse (53) schwenkbar gelagert ist, dass am Sporn ein Getriebe (46, 54) angreift, das von der Relativbewegung zwischen dem Pflugrahmen (5) und dem Stützradstiel (8) angetrieben ist und dass der Sporn (18) in Abhängigkeit vom Schwenkwinkel des Stützradstieles (8) relativ zum Pflugrahmen (5) verschwenkbar ist.

15. Pendelstützrad nach Anspruch 14, dadurch gekennzeichnet, dass das Antriebsglied (57) des Getriebes (54) mit dem Getriebeglied (59) drehfest und längsverschieblich verbunden ist.

16. Pendelstützrad nach Anspruch 15, dadurch gekennzeichnet, dass das Getriebe (46) aus Führungs- und Mitnahmeelementen (48 bis 51) besteht, die am Sporn (18) bzw. am Pflugrahmen (5) angeordnet sind und die nach Art eines Zahnradtriebes ineinandergreifen.

17. Pendelstützrad nach Anspruch 15, dadurch gekennzeichnet, dass das Getriebe (54) aus einer am Pflugrahmen (5) um die Gelenkachse (7) des Stützradstieles (8) mit veränderlichem Abstand zur Gelenkachse angebrachten Kulisse (55) besteht, in die ein Kulissenstein (56) eingreift, der ein mit dem Sporn (18) zusammenwirkendes Getriebeglied (59) verstellt.

18. Pendelstützrad nach Anspruch 17, dadurch gekennzeichnet, dass das Getriebeglied (59) aus einer drehbar gelagerten, im Querschnitt mehreckig ausgebildeten Stange besteht, auf der mit dem Zapfen zusammenwirkende Antriebs- (57) und mit dem Sporn (18) zusammenwirkende Abtriebsglieder (64) drehfest angeordnet sind.

19. Pendelstützrad nach Anspruch 18, dadurch gekennzeichnet, dass das Abtriebsglied (64) und der Sporn (18) über einen Lenker (66) miteinander verbunden sind.

20. Pendelstützrad nach einem der Ansprüche 1 bis 19, dadurch gekennzeichnet, dass mit dem Stützrad (9) ein damit zusammenwirkender Abstreifer verbunden ist.

## Revendications

1. Roue support oscillante pour charrue Brabant, comprenant une béquille (18) montée sur la jambe (8) de la roue support et disposée de façon déplaçable par rapport à la jambe, laquelle est montée sur un axe (7), dirigé transversalement par rapport à la direction d'avancement, du cadre (5) de charrue et s'applique, dans sa position de travail, avec inclinaison oblique vers l'arrière, contre une butée (11 ou 12) du cadre de charrue, parvient dans une position verticale lors du soulèvement du cadre de charrue, sous l'effet de la pesanteur, et pivote, lors du retournement du cadre de charrue, d'abord vers l'avant, puis dans la position verticale opposée, caractérisée en ce que la béquille (18) est montée coulissante sur la jambe (8) de la roue support et/ou est montée sur cette jambe de façon à pouvoir pivoter, d'une façon connue en soi, autour d'un axe (19, 23, 42, 45, 53) et en ce que, pour le coulissement ou le pivotement de la béquille (18) par rapport à la jambe (8) de roue support en fonction du mouvement de la jambe par rapport au cadre de charrue (5), le mouvement relatif entre la jambe (8) de roue support et la béquille (18) est produit par des éléments de liaison mécaniques (22; 32; 40; 46; 54).

2. Roue support oscillante selon la revendication 1, avec laquelle il se produit un pivotement de la béquille (18) par rapport à la jambe (8) de la roue support, caractérisée en ce que le palier (23) de la roue support est disposé sur la béquille (18) à une plus grande distance du support (7) de la jambe (8), que l'emplacement du palier d'appui (19) de la béquille (18) sur la jambe (8), en ce que le domaine de pivotement de la béquille (18) par rapport à la jambe (8) de la roue support est limité par des butées (20, 21), et en ce que la béquille (18) coopère avec au moins un ressort (25, 26) qui sollicite la béquille (18) vers une position se trouvant sensiblement dans la direction longitudinale de la jambe (8) de la roue support.

3. Roue support oscillante selon la revendication 2, caractérisée en ce que l'extrémité inférieure de la jambe (8) de la roue support ainsi que l'extrémité supérieure de la béquille (18) sont constituées en forme de fourches et que le ressort (25, 26) est disposé à l'extrémité inférieure de la jambe (8) de la roue support ou près de ladite extrémité inférieure.

4. Roue support oscillante selon la revendication 3, caractérisée en ce que le ressort (25, 26) est un ressort à branches, qui est fixé sur l'axe (19) et qui agit sur le palier de roue (23) par ses branches entre lesquelles passe une autre butée (24).

5. Roue support oscillante selon la revendication 3 ou 4, caractérisée en ce que les butées (20, 21) sont formées par les bords des extrémités, en forme de fourche, de la jambe (8) de la roue support.

6. Roue support oscillante selon la revendication 2, caractérisée en ce que la béquille (18) est prolongée extérieurement vers le haut au-delà de son palier d'appui (19) et passe entre deux lames de ressort (25, 26).

7. Roue support oscillante selon l'une des revendications 2 à 6, caractérisée en ce que la béquille (18) est constituée en deux parties, en ce que le palier (23) de la roue support (9) est disposé dans la première partie (22), fixée à la jambe (8) de roue support, et en ce que la deuxième partie (27) de la béquille (18) peut pivoter autour de ce palier de roue (23) et est maintenu par un téton (29) d'un appendice (28) passant dans un guide (30) formé dans l'extrémité inférieure de la jambe (8) de roue support.

8. Roue support oscillante selon la revendication 7, caractérisée en ce que le guide (30) formé dans l'extrémité inférieure de la jambe (8) de roue support se trouve entre le palier (23) de la roue et l'articulation (19) de la première partie (22) de la béquille (18) sur la jambe (8) de la roue support.

9. Roue support oscillante selon la revendication 1, comprenant une béquille (18) fixée avec possibilité de coulissement sur la jambe (8) de la roue support, caractérisée en ce que la béquille (18) est montée avec possibilité de coulissement dans un dispositif de maintien (38) fixé sur la jambe de roue support et en ce que l'extrémité (39) de la béquille (18) est reliée, directement ou non, au cadre de charrue (5).

10. Roue support oscillante selon la revendication 9, caractérisée en ce que le dispositif de maintien (38) est disposé rigidement sur la jambe (8) de la roue support et en ce qu'une biellette (40) est insérée entre la béquille (18) et le cadre de charrue (5) ou la plaque de fixation (10).

11. Roue support oscillante selon la revendication 9, caractérisée en ce que le dispositif de maintien (38) est capable de tourner, sur la jambe (8) de roue support, sur un axe (43) qui est parallèle à l'axe de la roue et en ce que l'extrémité (44) de la béquille (18) est articulée sur la plaque de fixation (10).

12. Roue support oscillante selon la revendication 1, avec laquelle il se produit un basculement de la béquille (18) par rapport à la jambe (8) de la roue support, caractérisée en ce que l'extrémité arrière de la béquille (18) porte deux butées (34, 35) disposées avec écartement par rapport à son axe de rotation (23), ces butées coopérant avec des butées (11, 12) prévues sur le cadre de charrue (5) et en ce que la béquille (18) est sollicitée par un ressort (36) vers une position qui se trouve sensiblement dans la direction longitudinale de la jambe (8) de la roue support.

13. Roue support oscillante selon la revendication 12, caractérisée en ce que les butées (34, 35) sont déplaçables sur la béquille et/ou les butées (11, 12) sont déplaçables sur le cadre de charrue, et sont adaptées par leur forme de façon à obtenir une grande plage de réglages en profondeur.

14. Roue support oscillante selon la revendication 1, avec laquelle il se produit un basculement de la béquille (18) par rapport à la jambe (8) de la roue support, caractérisée en ce que la béquille (18) est montée sur cette jambe avec pivotement possible par l'intermédiaire d'un axe (53), perpendiculaire à la jambe de roue support, en ce qu'un mécanisme (46, 54) qui est actionné par le mouvement relatif entre le cadre de charrue (5) et la jambe (8) de la roue support agit sur la béquille, et en ce que la béquille (18) peut pivoter par rapport au cadre de charrue (5) en fonction de l'angle de pivotement de la jambe (8) de la roue support.

15. Roue support oscillante selon la revendication 14, caractérisée en ce que l'élément d'entraînement (57) du mécanisme (54) est relié à l'élément de mécanisme (59), sans pouvoir tourner et en pouvant coulisser longitudinalement.

16. Roue support oscillante selon la revendication 15, caractérisée en ce que le mécanisme est constitué par des éléments (48 à 51) de guidage et d'entraînement, qui sont disposés sur la béquille (18) et sur le cadre de charrue (5) et qui engrènent à la façon d'une commande par engrenages.

17. Roue support oscillante selon la revendication 15, caractérisée en ce que le mécanisme (54) est constitué par une glissière (55) montée, sur le cadre de charrue (5), sur l'axe d'articulation (7) de la jambe (8) de la roue support, avec une distance variable de l'axe d'articulation, et avec laquelle coopère un coulisseau (56) qui déplace un élément de mécanisme (59) coopérant avec la béquille.

18. Roue support oscillante selon la revendication 17, caractérisée en ce que l'élément de mécanisme (59) est constitué par une tige ayant plusieurs côtés en section transversale et montée pour pouvoir tourner, et sur laquelle des éléments entraînants (57) coopérant avec le téton et des éléments entraînés (64) coopérant avec la béquille (18) sont disposés sans pouvoir tourner.

19. Roue support oscillante selon la revendication 18, caractérisée en ce que l'élément entraîné (64) et la béquille (18) sont reliés l'un à l'autre par une barrette (66).

20. Roue support selon l'une des revendications 1 à 19, caractérisée en ce qu'un racloir est relié à la roue support (9) pour coopérer avec elle.

**Claims**

1. A swinging depth wheel for a reversible plough, having a projecting member (18), which is disposed on a depth wheel shaft (8), the depth wheel shaft being disposed on an axle (7) of the plough frame (5), which runs transversely with respect to the direction of movement of the plough, and, in its operating position, the depth wheel shaft is inclined towards the rear and abuts against a stop (11 or 12) on the plough frame, moves into a vertical position as a result of the effect of gravity when the plough frame is raised and, when the plough frame is rotated, first moves forwards and then pivots into the opposite vertical position, characterised in that the projecting member (18) is displaceably mounted on the depth wheel shaft (8) and/or is pivotally mounted in a known way about an axle (19, 23, 42, 45, 53), and, in order to displace or pivot the projecting member (18) relative to the depth wheel shaft (8) in dependence upon the movement of the shaft with respect to the plough frame (5), the relative movement between the depth wheel shaft (8) and the projecting member is effected by mechanical connecting elements (22; 32; 40; 46; 54).

2. A swinging depth wheel as claimed in claim 1, in which the projecting member (18) is pivoted relative to the depth wheel shaft (8), characterised in that the wheel bearing (23) of the depth wheel on the projecting member (18) is disposed at a greater distance from the bearing (7) of the depth wheel shaft (8) than the bearing (19) of the projecting member (18) on the depth wheel shaft (8), the swing of the projecting member (18) relative to the depth wheel shaft (8) is limited by stops (20, 21) and the projecting member (18) cooperates with at least one spring (25, 26), which biasses the projecting member (18) into a position which lies approximately in the longitudinal direction of the depth wheel shaft (8).

3. A swinging depth wheel as claimed in claim 2, characterised in that the lower end of the depth wheel shaft (8) and the upper end of the projecting member (18) are forked, and the spring (25, 26) is disposed on or close to the lower end of the depth wheel shaft (8).

4. A swinging depth wheel as claimed in claim 3, characterised in that the spring (25, 26) is a leg spring which is fastened on the axle (19) and whose legs act on the wheel bearing (23), a further stop (24) passing between the legs.

5. A swinging depth wheel as claimed in claim 3 or 4, characterised in that the stops (20, 21) are formed by the corners of the fork-like ends of the depth wheel shaft (8).

6. A swinging depth wheel as claimed in claim 2, characterised in that the projecting member (18) is extended upwards beyond its bearing (19) and passes between two leaf springs (25, 26).

7. A swinging depth wheel as claimed in any of claims 2 to 6, characterised in that the projecting member (18) is in two parts, the wheel bearing (23) of the depth wheel (9) being disposed in the first part (22), which is fastened on the depth wheel shaft (8), and the second part (27) of the projecting member (18) is swingable about the wheel bearing (23) and is displaceably retained in a guide (30) formed in the lower end of the depth wheel shaft (8) by a stub (29) of a shoulder (28).

8. A swinging depth wheel as claimed in claim 7, characterised in that the guide (30) abuts against the depth wheel shaft (8) in the lower end thereof between the wheel bearing (23) and the pivotal point (19) of the first part (22) of the projecting member (18).

9. A swinging depth wheel as claimed in claim 1, having a projecting member (18) which is displaceably fastened on the depth wheel shaft (8), characterised in that the projecting member (18) is displaceably mounted in a holding device (38) fastened on the depth wheel shaft, and the end (39) of the projecting member (18) is directly or indirectly connected to the plough frame (5).

10. A swinging depth wheel as claimed in claim 9, characterised in that the holding device (38) is fixedly disposed on the depth wheel shaft (8), and a control lever (40) is connected between the projecting member (18) and the plough frame (5) or the fastening plate (10).

11. A swinging depth wheel as claimed in claim 9, characterised in that the holding device (38) can be turned about an axle (43) parallel to the wheel axle on the depth wheel shaft (8) and the end (44) of the projecting member (18) is articulated to the fastening plate (10).

12. A swinging depth wheel as claimed in claim 1, in which the projecting member (18) is pivoted relative to the depth wheel shaft (8), characterised in that, on the rear end of the projecting member (18), two stops (34, 35) are formed, which are disposed at a distance from its axis of rotation (23) and which cooperate with stops (11, 12) provided on the plough frame (5), and the projecting member (18) is biassed by a spring (36) into a position which lies approximately in the longitudinal direction of the depth wheel shaft (8).

13. A swinging depth wheel as claimed in claim 12, characterised in that the stops (34, 35) on the projecting member and/or the stops (11, 12) on the plough frame are adjustable and are formed in such a way that a large vertical adjustment range is obtained.

14. A swinging depth wheel as claimed in claim 1, in which the projecting member (18) is pivoted relative to the depth wheel shaft (8), characterised in that the projecting member (18) is pivotally mounted on the depth wheel shaft by way of an axle (53) which is perpendicular thereto, the projecting member is acted upon by a transmission (46, 54), which is driven by the relative motion between the plough frame (5) and the depth wheel shaft (8), and the projecting member (18) can be pivoted relative to the plough frame (5) in dependence upon the pivoting angle of the depth wheel shaft (8).

15. A swinging depth wheel as claimed in claim 14, characterised in that the drive member (57) of the transmission (54) is connected to the transmission member (59) in a non-rotatable and longitudinally displaceable manner.

16. A swinging depth wheel as claimed in claim 15, characterised in that the transmission (46) comprises guide and catch elements (48 to 51), which are disposed on the projecting member (18) or on the plough frame (15) and which mesh with one another in the manner of a toothed wheel drive.

17. A swinging depth wheel as claimed in claim 15, characterised in that the transmission (54) comprises a connecting member (55), which is mounted on the plough frame (5) about the articulated axle (7) of the depth wheel shaft (8) at a variable distance from the articulated axle (7), a sliding block (56), which adjusts a transmission member (59), which cooperates with the projecting member (18), engaging into said connecting member (55).

18. A swinging depth wheel as claimed in claim 17, characterised in that the transmission member (59) comprises a rotatably mounted rod, whose cross section is polygonal and on which drive members (57), which cooperate with the stud, and driven members (64), which cooperate with the projecting member (18), are disposed so as to be non-rotatable.

19. A swinging depth wheel as claimed in claim 18, characterised in that the driven member (64) and the projecting member (18) are connected to one another by way of a guide rod (66).

20. A swinging depth wheel as claimed in any of claims 1 to 19, characterised in that a stripper is connected to the depth wheel (9) and cooperates with it.

Fig. 1

EP 0 181 947 B1

1/6

Fig. 2

Fig. 3

EP 0 181 947 B1

3/6

Fig. 4

## Fig. 5

## Fig. 6

EP 0 181 947 B1

5/6

Fig.7

Fig. 11

Fig. 9
57
58
56

Fig. 8

Fig. 10
65
64

EP 0 181 947 B1

4/6